Europäisches Patentamt

European Patent Office

Office européen des brevets

(11) Publication number: **0 154 147 B1**

(12) **EUROPEAN PATENT SPECIFICATION**

(45) Date of publication of patent specification: 05.04.89

(51) Int. Cl.⁴: **G 01 N 35/00**

(21) Application number: 85100786.4

(22) Date of filing: 25.01.85

(54) Apparatus for measuring ionic activity.

(30) Priority: 25.01.84 JP 12794/84
25.01.84 JP 12795/84
25.01.84 JP 12796/84

(43) Date of publication of application:
11.09.85 Bulletin 85/37

(45) Publication of the grant of the patent:
05.04.89 Bulletin 89/14

(84) Designated Contracting States:
DE GB

(56) References cited:
EP-A-0 042 338
EP-A-0 042 338
GB-A-2 001 443
US-A-4 257 862
US-A-4 488 810

PATENTS ABSTRACTS OF JAPAN, vol. 7, no.
90 (P-191)1235r, 14th April 1983; & JP - A - 58
15158 (FUJI SHASHIN FILM K.K.) 28-01-1983

(73) Proprietor: FUJI PHOTO FILM CO., LTD.
210 Nakanuma Minamiashigara-shi
Kanagawa-ken, 250-01 (JP)

(72) Inventor: Seshimoto, Osamu
c/o Fuji Photo Film Co., Ltd 3-11-46 Sensui
Asaka-shi Saitama-ken (JP)
Inventor: Koizumi, Teruaki
c/o Fuji Photo Film Co., Ltd 3-11-46 Sensui
Asaka-shi Saitama-ken (JP)
Inventor: Saito, Yoshio
c/o Fuji Photo Film Co., Ltd 3-11-46 Sensui
Asaka-shi Saitama-ken (JP)
Inventor: Yamaguchi, Akira
c/o Fuji Photo Film Co., Ltd 3-11-46 Sensui
Asaka-shi Saitama-ken (JP)
Inventor: Terashima, Masaaki
c/o Fuji Photo Film Co., Ltd 3-11-46 Sensui
Asaka-shi Saitama-ken (JP)

(74) Representative: Kraus, Walter, Dr. et al
Patentanwälte Kraus, Weisert & Partner
Thomas-Wimmer-Ring 15
D-8000 München 22 (DE)

Courier Press, Leamington Spa, England.

## Description

### BACKGROUND OF THE INVENTION
### Field of the Invention

This invention relates to an apparatus for measuring ionic activity comprising:

a means for supplying slide-type ionic activity measuring devices, one by one, each said measuring device having at least one pair of ion-selective electrodes, each of which generate a potential difference corresponding to the ionic activity of one specific ion, and a porous bridge disposed between the ion-selective layers of at least one pair of said ion-selective electrodes;

a reference spotting means for spotting a substantially predetermined constant volume of a reference solution on one ion-selective layer of said pair of ion-selective electrodes of said measuring device;

a sample spotting means for spotting a substantially predetermined constant volume of a sample solution on the other ion-selective layer of said pair of ion-selective electrodes of said measuring device;

a discharging means for discharging said measuring device;

a first conveying section for conveying said measuring device to a measuring section after a sample solution is spotted on the other ion-selective layer of said pair of ion-selective electrodes;

at least one pair of vertically movable probes electrically connected to a means for measuring potential difference and having terminals which come into contact with said measuring device when it is motionless so as to measure the potential difference between said pair of ion-selective electrodes, and then separate from the latter before said measuring device is moved again;

a second conveying section for conveying said measuring device to said discharging means after the measurement; and

a cover which shields the upper faces of the slide-type measuring devices from the ambient atmosphere and which is disposed upon the turret.

This apparatus is adapted to measure ionic activity of electrolytes contained in aqueous liquid samples such as body fluids. More particularly, the apparatus of the invention is a novel potentiometric electrolyte analyzer in which a slide type ionic activity measuring device having ion-selective electrodes is transferred from a spotting section to a discharging section by way of a measuring section.

### Description of the Prior Art

Measurement of ionic activity of an electrolyte ion, for example $Na^+$, $K^+$, $Cl^-$, $Ca^{2+}$, $HCO_3^-$ or $CO_3^{2+}$, contained in such body fluids as whole blood, blood plasma, blood serum, and urine, has significant importance in clinical chemistry tests. For this measurement, an ionic activity measuring apparatus, i.e. a so-called electrolyte analyzer, has been used. Such techniques as flame analysis, coulometry and potentiometry are known for use in said analyzer.

In potentiometric measurement of ionic activity, an ionic activity measuring device having ion-selective electrodes is used. As such a device, a dry type device having film-like ion-selective electrodes has been disclosed, for example, in US-A-4 053 381 and US-A-4 437 970.

The basic structure of this ionic activity measuring device is that of a slide comprising at least one pair of solid state electrodes each of which has an ion-selective outermost layer and a porous bridge which can promote capillary action between two such ion-selective layers. The ionic activity of a specific ion contained in a sample solution can be determined by spotting a reference solution on one of the ion-selective layers and a sample solution on the other and then measuring the potential difference between the electrodes.

Accordingly, spotting of reference and sample solutions as well as measurement of potential difference must be conducted in an ionic activity analyzer in which this slide type device is used.

In the conventional analyzer used for this purpose, a slide-type devices (hereinafter referred to as "a slide") are drawn out, one at a time, from a cassette of such slides, put into a thermostatic means after the spotting of one or more droplets of a sample and reference solutions thereon, and then transferred from said thermostatic means to a measuring section where the measurement of the potential difference is conducted. This apparatus is large in its horizontal plane due to the lateral arrangement of the cassette, the spotting section, the thermostatic means and the measuring section. Accordingly, there has been a demand for a smaller analyzer which is easy to use.

The conventional analyzer also has the following drawbacks in the structure of the means for spotting the reference solution. In the conventional analyzer since the reference solution is pumped up from a reservoir by a nozzle and then spotted on the slide by the same nozzle, the surface of the reference solution comes into contact with air, causing a change in the concentration thereof. Also, since the nozzle has to be sufficiently deep into the solution so it is not exposed by lowering of the liquid level, the volume of liquid which adheres to the wall of the nozzle on suction changes at each suction so that the spotting volume is not constant.

In such measurement of ionic activity, the change in concentration of the solution, which causes errors in the measurement, becomes a particularly serious problem in practice.

An apparatus for measuring ionic activity of the first and second type mentioned in the beginning is known from US-A-4 257 862. This apparatus is relatively bulky and of reduced practical efficiency because the measuring devices are conveyed along a linear track and handled relatively impractically. Moreover, this known apparatus has a reduced accuracy of the measurement because the measuring device is provided with the reference and sample solutions during its exposure to the ambient atmosphere. Such exposure to the ambient atmosphere causes that the reference solution is fluctuating before and during the measurement.

Furthermore, EP-A-0 042 338 describes an apparatus for use in a chemical analyzer of the type which is adapted to measure a characteristic of a sample fluid deposited on an analysis slide. This apparatus comprises an incubator having means which defines a temperature-controlled chamber. The chamber has a transfer location at which an analysis slide can be transferred into the chamber and a transfer location at which a slide can be transferred out of the chamber. A conveyor means is provided in the chamber comprising a turret and having a plurality of slide-support stations for receiving analysis slides. The turret is movably supported in the chamber to successively place the slide-support stations at the transfer locations. Furthermore, cover means is provided for controlling evaporation of fluids on slides in the chamber. This cover means is movable by a control means to an operative position to at least partially enclose analysis slides on the turret and to a second position spaced from this operative position to permit analysis slides to be transferred into or out of the slide-support stations.

This apparatus disclosed in EP-A-0 042 338 is also very bulky and of complicated construction because the spotting and analyzing sections are located outside the rotation area of the turret and therefore it is necessary to provide special transfer devices for transferring the slides from the turret to the spotting section and then return to the turret as well as for transferring the slides from the turret to the analyzing section and then return to the turret.

## SUMMARY OF THE INVENTION

It is thus an object of the present invention to provide an apparatus for measuring ionic activity which is compact and easy to use.

More specifically, it is an object of the present invention to provide a potentiometric ionic activity measuring apparatus in which a number of slides can be efficiently measured within a small space.

It is another object of the present invention to provide an apparatus for measuring ionic activity having a means for liquid-spotting which can provide a constant supply of a reference solution.

It is another specific object of the present invention to provide an apparatus for measuring ionic activity having a means for liquid-spotting by which a reference solution is supplied without coming into contact with air, so that the concentration thereof is not changed.

It is still another specific object of the present invention to provide an apparatus for measuring ionic activity having a means for liquid-spotting in which a predetermined constant volume of a reference solution is discharged through a nozzle without adhering to the wall thereof.

The invention provides an apparatus for measuring ionic activity of the type first mentioned in the beginning which is characterized by said first and second conveying sections consisting of a turret which intermittently rotates while successively receiving said measuring devices one after the other;

said reference spotting means being disposed within the rotation area of said turret;

said turret comprising a disk, the periphery of said disk being formed at regular intervals into slide-type measuring device receiving portions each of which receives a measuring device which is conveyed by rotation of said disk;

said terminals being needle-like; and

said discharging means being a discharging chute formed within the rotation area of said turret so that said measuring device, after the measurement, is automatically discharged through said discharging chute by the rotation of said turret.

Further developments of the apparatus according to the invention are stated in the dependent claims.

As stated in the claims apparatuses of the invention have particularly the following aspects:

The apparatus has a turret on which slides, supplied one by one, are conveyed, and at least one pair of vertically movable probes for measuring a potential difference which can be brought into electrical contact with the slides within the rotation area of said turret.

The disk preferably slidably rotates in the vicinity of a thermostatic plate (i.e. upon the plate or between a pair of such plates) maintained at a constant temperature by a thermostatic means such as a heater or a thermocooler.

A slide is conveyed by rotation of said disk while being maintained at a constant temperature.

The probe used in accordance with the present invention has needle-like terminals which can vertically and electrically come into contact with the ion-selective electrodes of the slide, and is electrically connected to a means for potential difference.

A discharging chute is provided within the rotation area of the turret so that the slides can be automatically discharged by the rotation of said turret after the measurement thereof. Also, the spotting section is disposed within the rotation area of the turret so as to further reduce the size of the whole apparatus.

The apparatus for measuring ionic activity in accordance with the present invention may further comprise an operation and display section for operation and display of the measurement. Preferably, the supplying means, turret, probes, discharging section, and operation and display section are disposed within a single housing.

To drip a predetermined constant volume of the reference solution through the nozzle of the reference spotting means, e.g. such means as a peristaltic pump that can quantitatively transfer a micro volume of liquid is used. Also, a drip dispenser with reservoir can be used.

BRIEF DESCRIPTION OF THE DRAWINGS

Figure 1 is a perspective view of an embodiment of a potentiometric ionic activity measuring device to which the apparatus in accordance with the present invention is applicable;

Figure 2 is a perspective view of another example of a potentiometric ionic activity measuring device;

Figure 3 is a schematic perspective view of an embodiment of the apparatus in accordance with the present invention;

Figure 4 is a schematic view of an example of a peristaltic pump which can be used in the spotting section of the apparatus in accordance with the present invention;

Figure 5 is a front view of an example of a drip dispenser which can be used in said spotting section;

Figure 6A is a perspective view of an example of a probe assembly used in the apparatus of the present invention.

Figure 6B is a partial sectional side view of said probe assembly; and

Figure 7 is a front view of an example of an operation and display section for use in the apparatus in accordance with the present invention.

DESCRIPTION OF THE PREFERRED
EMBODIMENTS

The preferred embodiments of the present invention will hereinbelow be described with reference to the accompanying drawings.

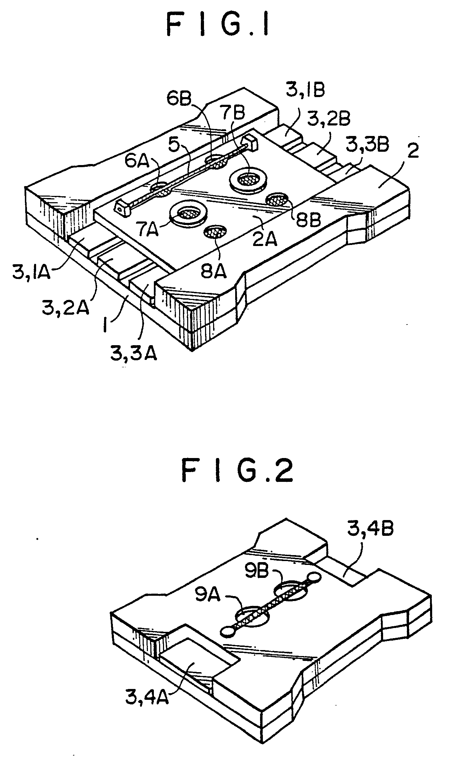

Figure 1 is a perspective view of an example of a slide-type ionic activity measuring device or article (i.e a slide) to which the apparatus in accordance with the present invention is applicable. The slide here comprises a lower slide frame 1, an upper slide frame 2, and three pairs of ion-selective electrodes 3.1A, 3.1B; 3.2A, 3.2B; and 3.3A, 3.3B, each of said pairs having an ion-selective outermost layer (not shown) and being disposed between said lower and upper slide frames 1 and 2. Three pairs of through holes 6A, 6B; 7A, 7B; and 8A, 8B are formed in the center portion 2A of the upper slide frame 2. These through holes are functionally divided into a pair of apertures for liquid-spotting 7A and 7B, and two pairs of vent apertures 6A, 6B; and 8A, 8B. A porous bridge (spun yarn or thread bridge) 5 which can promote capillary action is disposed on the vent apertures 6A and 6B. The ends of the bridge 5 are fixed on the upper slide frame 2. Although not shown in the drawing, first and second porous members for liquid distribution (made of such material as cotton bandage, cotton gauze, or filter paper) are disposed between the ion-selective layers of the first set of ion-selective electrodes 3.1A, 3.2A, and 3.3A and the first set of through holes 6A, 7A and 8A; and between the ion-selective layers of the second set of ion-

selective electrodes 3.1B, 3.2B, and 3.3B and the second set of through holes 6B, 7B and 8B.

Each pair of said ion-selective electrodes may have a different ion-selectivity, for example, the electrodes 3.1A and 3.1B for $Na^+$; 3.2A and 3.2B for $K^+$; and 3.3A and 3.3B for $C1^-$. In this case, for example, one or more droplets of a reference solution containing $Na^+$, $K^+$, and $C1^-$ of a known ionic activity is spotted on the aperture for liquid-spotting 7A and one or more droplets of a sample solution (e.g. whole blood or blood serum) is spotted on the aperture for liquid-spotting 7B so as to determine the ionic activity of said ions. Said reference and sample solutions diffuse through the porous members for liquid distribution so as to hemispherically rise from the vent apertures 6A and 6B, respectively, and then penetrate the porous bridge 5 so that their interfaces meet within said bridge, thus forming an electrical conduction therebetween. At that point, a pair of probes are brought into contact with each pair of terminal portions of said pairs of electrodes, so that the potential difference between each pair of said electrodes is measured (i.e. between 3.1A and 3.1B, 3.2A and 3.2B, and 3.3A and 3.3B). The term "potential difference" as used herein refers to difference in electro-motive force between a pair of ion-selective electrodes. The ionic activity of each of the ions is determined from thus measured potential difference with reference to its corresponding calibration curve.

The foregoing type of slide which can simultaneously measure the ionic activity of different ions is fully described in U.S. Patent No. 4,437,970.

Figure 2 shows an example of an ionic activity measuring device in which the ionic activity of only one predetermined ion is measurable. This slide has a pair of apertures for liquid spotting 9A and 9B and a pair of ion-selective electrodes 3.4A and 3.4B corresponding thereto.

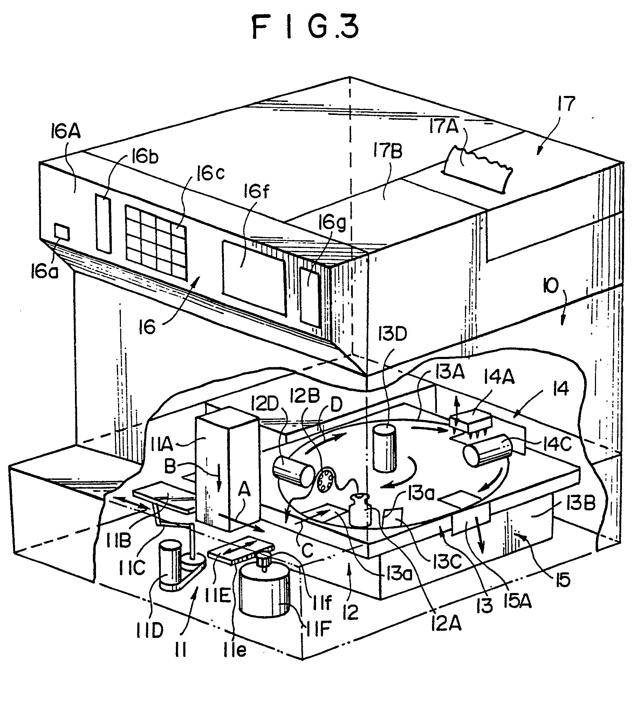

Figure 3 shows an embodiment of the apparatus for measuring ionic activity in accordance with the present invention. The present invention will hereinbelow be described in detail with reference to this embodiment.

The apparatus represented by this drawing is contained in a housing 10 and consists of a slide supplying section 11, a spotting section 12, a thermostatic means 13, a measuring section 14, a discharging section 15, an operation and display section 16, and a printer 17.

The slide supplying section 11 comprises a slide holder 11A which contains a stack of slides, a slide pushing member 11B which pushes out one slide at a time from the lower end of said holder 11A, and a crank member 11C driven by a motor 11D which reciprocates said pushing member 11B. When the lowest slide is pushed out by the pushing member 11B in the direction indicated by arrow A, the stack of slides within the slide holder 11A descends in the direction of arrow B. The pushing member 11B enters the slide holder 11A through an opening formed on a side face of the lower end thereof so as to push out a slide, and then exits from the holder 11A, allowing the next slide to descend to the lowermost position in the holder 11A.

The slide pushed out of the holder 11A is thrust in the direction indicated by arrow C by charging means 11E which has a rack 11e which engages with a pinion 11f fixed on the shaft of a motor 11F and which is reciprocated by the rotation of said motor 11F. The slide thrust by the charging means 11E is pushed into one of the slide receiving portions 13a formed on the periphery of a disc-like turret 13A.

At a certain stage before, during (i.e. at a position where an intermittently supplied slide stops), and after the insertion of the slide, one or more droplet of the reference solution from a reservoir 12A is spotted on the slide by means of a peristaltic pump 12B.

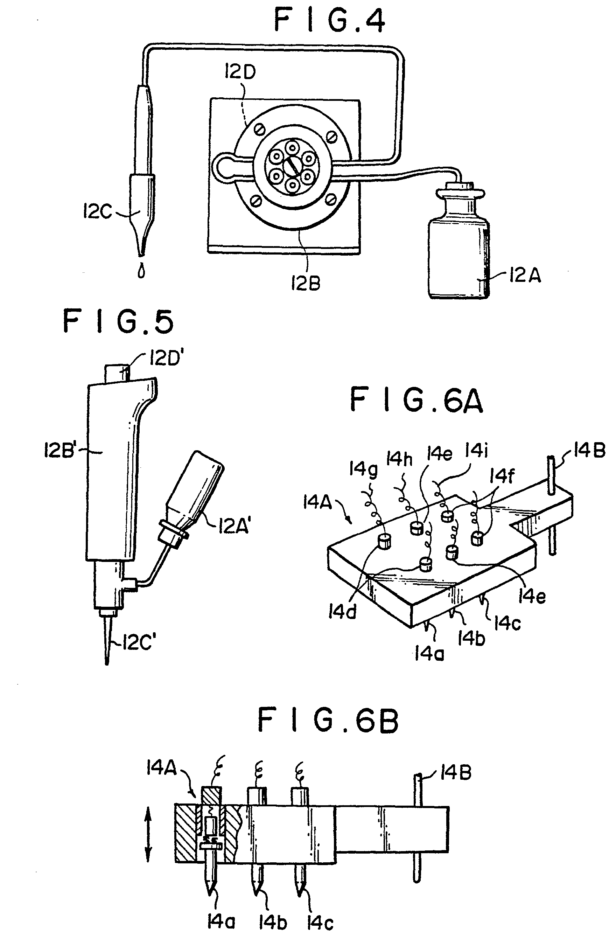

An example of a device to be used for the spotting of the reference solution is shown in detail in Figure 4. The intake of the peristaltic pump 12B is connected to the reservoir 12A of the reference solution and the outlet to a nozzle 12C, so that said reference solution is fed, droplet by droplet, from the nozzle 12C, by means of a motor 12D, onto one of the pair of apertures for liquid-spotting of the slide located below the nozzle 12C. Such a peristaltic pump is preferably used for the apparatus in accordance with the present invention since the reference solution is fed only in one direction so that it can be supplied at a constant volume and concentration.

However, other types of spotting means, including the drip dispenser with reservoir shown in Figure 5, can also be used. The dispenser represented by this drawing comprises a reservoir 12A', a discharging means 12B', a nozzle 12C' and a button 12D'. Each time the button 12D' is pressed, a droplet of the liquid contained in the reservoir 12A' is discharged from the nozzle 12C'.

By using one of the spotting means described, a constant volume of the reference solution is deposited on one aperture for liquid-spotting (e.g. 7A of Figure 1 or 9A of Figure 2) of each slide.

Preferably at nearly the same time, one or more droplet of a sample solution is manually or automatically spotted on the other aperture for liquid-spotting (e.g. 7B of Figure 1 or 9B of Figure 2) of the same slide, using any of the known techniques.

The slide which has been thus spotted is conveyed in the direction of arrow D by the rotation of said turret 13A.

The turret 13A is rotatably disposed upon a thermostatic plate 13C which is fixed to a heater (or a thermocooler) 13B, and is intermittently rotated in the direction of arrow D by means of a motor 13D. The angle of this intermittent rotation is equal to the angular distance between one slide receiving portion 13a and the next, said slide receiving portions being disposed equidistantly. A guiding wall having a height not less than the thickness of the turret 13A is formed around the rim of said turret 13A so as to prevent the slides from falling out from the slide receiving portions 13a due to the rotation of said turret 13A.

In order to prevent the reference and sample solutions spotted on the slides from evaporating water as well as to sufficiently maintain the thermostatic effect obtained by the thermostatic plate 13C, a cover (not shown) which shields the upper faces of the slides from the ambient atmosphere is disposed upon the turret 13A. Naturally, this cover has an opening at the measuring section, which will be described hereinbelow, and at the spotting section in case the slide is inserted into the slide receiving portion 13a in the turret 13A prior to the spotting, so that necessary operations can be conducted with the cover in place.

Within the rotation area of the turret 13A, a vertically movable probe assembly 14A for measuring potential difference is disposed. As shown in Figures 6A and 6B, the aforesaid measuring section 14 comprises the probe assembly 14A having, if the slide shown in Figure 1 is used, six needle-like terminals 14a, 14b, 14c, . . . which are resiliently projected, and lead wires 14g, 14h, and 14i for outputting the potential difference from contacts 14d, 14e, and 14f of said terminals to a measuring circuit (not shown); and a guide 14B to which said probe assembly 14A is connected so as to be vertically movable. This probe assembly 14 is vertically moved by means of a known mechanism (not shown) which is driven by a motor 14C.

Though in accordance with the foregoing embodiment the slide is conveyed with its apertures for liquid-spotting facing up, the slide can also be conveyed with said apertures facing down. In the latter case, the probe assembly may be moved upwardly from below with its probes projecting up so as to come into contact with the terminals of said slide.

The turret 13A conveys the slide, by way of the measuring section 14, to the discharging section 15 which consists of a discharging chute 15A formed in the thermostatic plate 13C. Since the slide receiving portion 13a of the turret 13A consists of a cutout, the slide received in the cutout is slidably shifted on the thermostatic plate 13C together with the rotation of said turret 13A so as to be cast off at and discharged through the discharging chute 15A which is slantingly formed beneath the thermostatic plate 13C.

The operation and display section 16 shown in Figure 7 comprises a power switch 16a; a display for ion species 16b (in which "MULT" is a lamp indicating that such a multi-type slide with three pairs of the ion-selective electrodes (each for a predetermined ion species) as shown in Figure 1 is being measured); a display for the measured ionic activity 16c; a lamp 16d for indicating the measurement ready status;

a warning lamp 16e; a number keyboard 16f through which calibration data, IDs and the like are inputted; and other operation buttons 16g for various purposes; all of which are disposed on an operation panel 16A.

The measured results are printed out on a paper 17A by the printer 17. An interface for the printer 17B is disposed between said printer 17 and said panel 16A.

**Claims**

1. An apparatus for measuring ionic activity comprising:

a means (11) for supplying slide-type ionic activity measuring devices, one by one, each said measuring device having at least one pair of ion-selective electrodes (3.1A, 3.1B, 3.2A, 3.2B, 3.3A, 3.3B, 3.4A, 3.4B), each of which generate a potential difference corresponding to the ionic activity of one specific ion, and a porous bridge (5) disposed between the ion-selective layers of at least one pair of said ion-selective electrodes (3.1A, 3.1B, 3.2A, 3.2B, 3.3A, 3.3B, 3.4A, 3.4B);

a reference spotting means (12A-12D, 12A'-12D') for spotting a substantially predetermined constant volume of a reference solution on one ion-selective layer of said pair of ion-selective electrodes (3.1A, 3.1B, 3.2A, 3.2B, 3.3A, 3.3B, 3.4A, 3.4B) of said measuring device;

a sample spotting means (12) for spotting a substantially predetermined constant volume of a sample solution on the other ion-selective layer of said pair of ion-selective electrodes (3.1A, 3.1B, 3.2A, 3.2B, 3.3A, 3.3B, 3.4A, 3.4B) of said measuring device;

a discharging means (15) for discharging said measuring device;

a first conveying section for conveying said measuring device to a measuring section (14) after a sample solution is spotted on the other ion-selective layer of said pair of ion-selective electrodes (3.1A, 3.1B, 3.2A, 3.2B, 3.3A, 3.3B, 3.4A, 3.4B);

at least one pair of vertically movable probes (14A) electrically connected to a means for measuring potential difference and having terminals (14a, 14b, 14c) which come into contact with said measuring device when it is motionless so as to measure the potential difference between said pair of ion-selective electrodes (3.1A, 3.1B, 3.2A, 3.2B, 3.3A, 3.3B, 3.4A, 3.4B), and then separate from the latter before said measuring device is moved again;

a second conveying section for conveying said measuring device to said discharging means (15) after the measurement; and

a cover which shields the upper faces of the slide-type measuring devices from the ambient atmosphere and which is disposed upon the turret (13A);

characterized by said first and second conveying sections consisting of a turret (13A) which intermittently rotates while successively receiving said measuring devices one after the other;

said reference spotting means (12A-12D, 12A'-12D') being disposed within the rotation area of said turret (13A);

said turret (13A) comprising a disk, the periphery of said disk being formed at regular intervals into slide-type measuring device receiving portions (13a) each of which receives a measuring device which is conveyed by rotation of said disk;

said terminals (14a, 14b, 14c) being needle-like; and

said discharging means (15) being a discharging chute (15A) formed within the rotation area of said turret (13A) so that said measuring device, after the measurement, is automatically discharged through said discharging chute (15A) by the rotation of said turret (13A).

2. An apparatus for measuring ionic activity according to Claim 1, characterized in that said turret (13A) consists of a disc at least a part of which forming said first conveying section is slidably rotatable in the vicinity of a thermostatic plate (13C).

3. An apparatus for measuring ionic activity according to Claim 1, characterized in that said turret (13A) consists of a disc a part of which forming said first and second conveying sections is slidably rotatable on a thermostatic plate (13C), and said thermostatic plate (13C) has a discharging port connected to said discharging chute (15A).

4. An apparatus for measuring ionic activity according to Claim 1, characterized in that a guiding wall having a height not less than the thickness of said turret (13A) is formed around the rim of said turret (13A).

5. An apparatus for measuring ionic activity according to Claim 1, characterized in that said supplying means (11) comprises a slide holder (11A) and a pushing member (11B), said slide holder (11A) containing a stack of said ionic activity measuring devices, and said pushing member (11B) pushing out said measuring devices, one by one, from the bottom of said slide holder (11A).

6. An apparatus for measuring ionic activity according to Claim 1, characterized in that it further comprises an operation and display section (16) having an operation panel (16A) and a display section (11c) for indicating the output of said probes (14A) wherein said operation and display section (16) is disposed in a housing (10) so as to be viewable from the outside thereof, and said supplying means (11), said spotting means (12), said turret (13A), and said probes (14A) are contained within said housing (10).

7. An apparatus for measuring ionic activity according to Claim 1, characterized in that said reference spotting means (12A-12D, 12A'-12D') being disposed in connection with a reservoir (12A, 12A') containing said reference solution and a spotting section (12) of said measuring device, and comprising a dripping nozzle (12C, 12C') connected to said reservoir (12A, 12A') so as to drip said reference solution contained therein and a reference solution supplying means (12B, 12D, 12B', 12D') which supplies a predetermined constant volume of said reference solution from said reservoir (12A, 12A') through said nozzle (12C, 12C'); said reference solution supplying means (12B, 12D, 12B', 12D') supplying said reference solution through said nozzle (12C, 12C') when said measuring device stops below said nozzle (12B, 12D, 12B', 12D').

8. An apparatus for measuring ionic activity according to Claim 7, characterized in that said reference spotting means (12A-12D) comprises a peristaltic pump (12B).

9. An apparatus for measuring ionic activity according to Claim 7, characterized in that said reference spotting means (12A'-12D') comprises a drip dispenser (12B').

10. An apparatus for measuring ionic activity according to Claim 1 or 7, characterized in that said first conveying section has a thermostatic means (13C) to maintain said measuring device at a constant temperature during motion.

11. An apparatus for measuring ionic activity according to Claim 10, characterized in that said pair of probes (14A) has a plurality of pairs of needle-like terminals (14a, 14b, 14c) adapted to simultaneously come into contact with a plurality of pairs of ion-selective electrodes (3.1A, 3.1B, 3.2A, 3.2B, 3.3A, 3.3B, 3.4A, 3.4B) of said measuring device.

## Patentansprüche

1. Vorrichtung zum Messen der Ionenaktivität, umfassend:

eine Einrichtung (11) zum Zuführen von Ionenaktivitätsmeßeinrichtungen vom Objektträgertyp eine nach der anderen, wobei jede Meßeinrichtung wenigstens ein Paar von ionenselektiven Elektroden (3.1A, 3.1B, 3.2A, 3.2B, 3.3A, 3.3B, 3.4A, 3.4B) hat, von denen jede eine Potentialdifferenz erzeugt, die der Ionenaktivität von einem spezifischen Ion entspricht, und eine poröse Brücke (5), die zwischen den ionenselektiven Schichten von wenigstens einem Paar der ionenselektiven Elektroden (3.1A, 3.1B, 3.2A, 3.2B, 3.3A, 3.3B, 3.4A, 3.4B) angeordnet ist;

eine Bezugstüpfeleinrichtung (12A-12D, 12A'-12D') zum Tüpfeln eines im wesentlichen vorbestimmten konstanten Volumens einer Bezugslösung auf eine ionenselektive Schicht des Paars von ionenselektiven Elektroden (3.1A, 3.1B, 3.2A, 3.2B, 3.3A, 3.3B, 3.4A, 3.4B) der Meßeinrichtung;

eine Probentüpfeleinrichtung (12) zum Tüpfeln eines im wesentlichen vorbestimmten konstanten Volumens einer Probenlösung auf die andere ionenselektive Schicht des Paars von ionenselektiven Elektroden (3.1A, 3.1B, 3.2A, 3.2B, 3.3A, 3.3B, 3.4A, 3.4B) der Meßeinrichtung;

eine Entladeeinrichtung (15) zum Entladen der Meßeinrichtung;

einen ersten Förderabschnitt zum Fördern der Meßeinrichtung zu einem Meßabschnitt (14), nachdem eine Probenlösung auf die andere ionenselektive Schicht des Paars von ionenselektiven Elektroden (3.1A, 3.1B, 3.2A, 3.2B, 3.3A, 3.3B, 3.4A, 3.4B) getüpfelt worden ist;

wenigstens ein Paar von vertikal bewegbaren Sonden (14A), die elektrisch mit einer Einrichtung zum Messen einer Potentialdifferenz verbunden sind und Anschlüsse (14a, 14b, 14c) haben, welche in Kontakt mit der Meßeinrichtung kommen, wenn sie bewegungslos ist, so daß die Potentialdifferenz zwischen dem Paar von ionenselektiven Elektroden (3.1A, 3.1B, 3.2A, 3.2B, 3.3A, 3.3B, 3.4A, 3.4B) gemessen wird, und sich dann von der letzteren trennen, bevor die Meßeinrichtung erneut bewegt wird;

einen zweiten Förderabschnitt zum Fördern der Meßeinrichtung zu der Entladungseinrichtung (15) nach der Messung; und

einen Deckel, der die oberen Flächen der Meßeinrichtungen vom Objektträgertyp von der Umgebungsatmosphäre abschirmt und der auf dem Drehkopf (13A) angeordnet ist;

dadurch gekennzeichnet, daß der erste und zweite Förderabschnitt aus einem Drehkopf (13A) bestehen, welcher sich intermittierend dreht, während er aufeinanderfolgend die Meßeinrichtungen eine nach der anderen erhält;

die Bezugstüpfeleinrichtung (12A-12D, 12A'-12D') innerhalb des Drehbereichs des Drehkopfes (13A) angeordnet ist;

der Drehkopf (13A) eine Scheibe umfaßt, wobei der Umfang der Scheibe in regelmäßigen Intervallen zu Objektträgertyp-Meßeinrichtungs-Aufnahmeteilen (13a) ausgebildet ist, von denen jeder eine Meßeinrichtung erhält, die durch Drehung der Scheibe gefördert wird;

die Anschlüsse (14a, 14b, 14c) nadelartig sind; und

die Entladungseinrichtung (15) eine Entladungsrutsche (15A) ist, die innerhalb des Drehbereichs des Drehkopfes (13A) ausgebildet ist, so daß die Meßeinrichtung nach der Messung automatisch durch die Entladungsrutsche (15A) durch die Drehung des Drehkopfes (13A) entladen wird.

2. Vorrichtung zum Messen der Ionenaktivität nach Anspruch 1, dadurch gekennzeichnet, daß der Drehkopf (13A) aus einer Scheibe besteht, von der wenigstens ein Teil, welcher den ersten Förderabschnitt bildet, in der Nähe einer thermostatischen Platte (13C) gleitend drehbar ist.

3. Vorrichtung zum Messen der Ionenaktivität nach Anspruch 1, dadurch gekennzeichnet, daß der Drehkopf (13A) aus einer Scheibe besteht, von der ein Teil, welcher den ersten und zweiten Förderabschnitt bildet, auf einer thermostatischen Platte (13C) gleitend drehbar ist, und daß die thermostatische Platte (13C) einen Entladungsdurchlaß hat, der mit der Entladungsrutsche (15A) verbunden ist.

4. Vorrichtung zum Messen der Ionenaktivität nach Anspruch 1, dadurch gekennzeichnet, daß eine Führungswand, die eine Höhe, welche nicht kleiner als die Dicke des Drehkopfes (13A) ist, um den Rand des Drehkopfes (13A) ausgebildet ist.

5. Vorrichtung zum Messen der Ionenaktivität nach Anspruch 1, dadurch gekennzeichnet, daß die Zuführungseinrichtung (11) einen Objektträgerhalter (11A) und ein Schiebeteil (11B) umfaßt, wobei der Objektträgerhalter (11A) einen Stapel der Ionenaktivitätsmeßeinrichtungen enthält, und wobei das Schiebeteil (11B) die Meßeinrichtungen eine nach der anderen aus dem Boden des Objektträgerhalters (11A) herausschiebt.

6. Vorrichtung zum Messen der Ionenaktivität nach Anspruch 1, dadurch gekennzeichnet, daß sie weiter einen Betriebs- und Displayabschnitt (16) umfaßt, der eine Betriebstafel (16A) und einen Displayabschnitt (11c) zum Anzeigen der Ausgangsgröße der Sonden (14A) hat, worin der Betriebs- und Displayabschnitt (16) in einem Gehäuse (10) so angeordnet ist, daß er von der Außenseite desselben sichtbar ist, und wobei die Zuführungseinrichtung (11), die Tüpfeleinrichtung (12), der Drehkopf (13A) und die Sonden (14A) innerhalb des Gehäuses (10) enthalten sind.

7. Vorrichtung zum Messen der Ionenaktivität nach Anspruch 1, dadurch gekennzeichnet, daß die Bezugstüpfeleinrichtung (12A-12D, 12A'-12D') in Verbindung mit einem Reservoir (12A, 12A'), das die Bezugslösung enthält, und einem Tüpfelabschnitt (12) der Meßeinrichtung angeordnet ist, und daß sie eine Tropfdüse (12C, 12C'), die mit dem Reservoir (12A, 12A') so verbunden ist, daß die darin enthaltene Bezugslösung getropft wird, und eine Bezugslösungszuführungseinrichtung (12B, 12D, 12B', 12D'), welche ein vorbestimmtes konstantes Volumen der Bezugslösung von dem Reservoir (12A, 12A') durch die Düse (12C, 12C') zuführt, umfaßt; wobei die Bezugslösungszuführungseinrichtung (12B, 12D, 12B', 12D') die Bezugslösung durch die Düse (12C, 12C') zuführt, wenn die Meßeinrichtung unter der Düse (12B, 12D, 12B', 12D') stoppt.

8. Vorrichtung zum Messen der Ionenaktivität nach Anspruch 7, dadurch gekennzeichnet, daß die Bezugstüpfeleinrichtung (12A-12D) eine peristaltische Pumpe (12B) umfaßt.

9. Vorrichtung zum Messen der Ionenaktivität nach Anspruch 7, dadurch gekennzeichnet, daß die Bezugstüpfeleinrichtung (12A'-12D') ein Tropfausgabegerät (12B') umfaßt.

10. Vorrichtung zum Messen der Ionenaktivität nach Anspruch 1 oder 7, dadurch gekennzeichnet, daß der erste Förderabschnitt eine thermostatische Einrichtung (13C) zum Halten der Meßeinrichtung auf einer konstanten Temperatur während der Bewegung hat.

11. Vorrichtung zum Messen der Ionenaktivität nach Anspruch 10, dadurch gekennzeichnet, daß das Paar Sonden (14A) eine Mehrzahl von Paaren von nadelartigen Anschlüssen (14a, 14b, 14c) hat, die dazu geeignet sind, gleichzeitig in Kontakt mit einer Mehrzahl von Paaren von ionenselektiven Elektroden (3.1A, 3.1B, 3.2A, 3.2B, 3.3A, 3.3B, 3.4A, 3.4B) der Meßeinrichtung zu kommen.

## Revendications

1. Dispositif pour la mesure de l'activité ionique, comprenant:

des moyens (11) pour distribuer des dispositifs de mesure de l'activité ionique du type à plaquette coulissante, un par un, chacun de ces dispositifs de mesure comportant au moins deux électrodes à sélectivité ionique (3.1A, 3.1B, 3.2A, 3.2B, 3.3A, 3.3B, 3.4A, 3.4B) dont chacune génère une différence de potentiel correspondant à l'activité ionique d'un ion spécifique, et un pont poreux (5) disposé entre les couches à sélectivité ionique d'au moins une paire de dites électrodes à sélectivité ionique (3.1A, 3.1B, 3.2A, 3.2B, 3.3A, 3.3B, 3.4A, 3.4B);

des moyens de formation de tache de référence (12A-12D, 12A'-12D') pour déposer une tache ayant un volume sensiblement constant prédéterminé d'une solution de référence sur une couche à sélectivité ionique de la dite paire d'électrodes à sélectivité ionique (3.1A, 3.1B, 3.2A, 3.2B, 3.3A, 3.3B, 3.4A, 3.4B) dudit dispositif de mesure;

des moyens de formation de tache d'échantillon (12) pour déposer une tache ayant un volume sensiblement constant prédéterminé d'une solution d'échantillon sur l'autre couche à sélectivité ionique de ladite paire d'électrodes à sélectivité ionique (3.1A, 3.1B, 3.2A, 3.2B, 3.3A, 3.3B, 3.4B) dudit dispositif de mesure;

des moyens d'évacuation (15) pour évacuer ledit dispositif de mesure;

un premier élément de transport, pour transporter ledit dispositif de mesure à une section de mesure (14) après dépôt d'une tache de solution d'échantillon sur l'autre couche à sélectivité ionique de ladite paire d'électrodes à sélectivité ionique (3.1A, 3.1B, 3.2A, 3.2B, 3.3A, 3.3B, 3.4A, 3.4B);

au moins deux sondes verticalement mobiles (14A) électriquement connectées à des moyens de mesure de difference de potentiel et comportant des bornes (14a, 14b, 14c) qui viennent en contact avec ledit dispositif de mesure lorsqu'il est immobile, afin de mesurer la différence de potentiel entre lesdites deux électrodes à sélectivité ionique (3.1A, 3.1B, 3.2A, 3.2B, 3.3A, 3.3B, 3.4A, 3.4B), puis s'éloignent de ces dernières avant que ledit dispositif de mesure se déplace à nouveau;

un deuxième élément de transport, pour transporter ledit dispositif de mesure auxdits moyens d'évacuation (15) après la mesure; et

un couvercle qui protège les faces supérieures des dispositifs de mesure du type à plaquette coulissante de l'atmosphère ambiante et qui est disposé sur la tourelle (13A);

caractérisé en ce que lesdits premier et deuxième éléments de transport sont constitués d'une tourelle (13A) qui tourne de façon intermittente tout en recevant successivement les dits dispositifs de mesure, l'un après l'autre;

lesdits moyens de formation de tache de référence (12A-12D, 12A'-12D') sont disposés dans la zone de rotation de ladite tourelle (13A);

ladite tourelle (13A) comprend un disque, la périphérie de ce disque présentant, à intervalles réguliers, des parties (13a) de réception de dispositif de mesure du type à plaquette coulissante, dont chacune reçoit un dispositif de mesure qui est transporté par la rotation dudit disque;

lesdites bornes (14a, 14b, 14c) sont du type à aiguille; et

lesdits moyens d'évacuation (15) comprennent un conduit de chute (15A) formé dans la zone de rotation de ladite tourelle (13A) de sorte que ledit dispositif de mesure, après la mesure, est automatiquement évacué par ledit conduit de chute (15A) du fait de la rotation de ladite tourelle (13A).

2. Dispositif pour la mesure de l'activité ionique suivant la revendication 1, caractérisé en ce que ladite tourelle (13A) consiste en un disque dont au moins une partie, formant ledit premier élément de transport, peut tourner de façon coulissante au voisinage d'une plaque thermostatique (13C).

3. Dispositif pour la mesure de l'activité ionique suivant la revendication 1, caractérisé en ce que ladite tourelle (13A) consiste en un disque dont une partie, formant lesdits premier et deuxième éléments de transport, peut tourner de façon coulissante sur une plaque thermostatique (13C), et ladite plaque thermostatique (13C) comporte un orifice d'évacuation raccordé audit conduit de chute (15A).

4. Dispositif pour la mesure de l'activité ionique suivant la revendication 1, caractérisé en ce qu'une paroi de guidage ayant une hauteur non inférieure à l'épaisseur de ladite tourelle (13A) est formée autour du bord de ladite tourelle (13A).

5. Dispositif pour la mesure de l'activité ionique suivant la revendication 1, caractérisé en ce que lesdits moyens de distribution (11) comprennent un porte-plaquettes (11A) et un poussoir (11B), ledit porte-plaquettes (11A) contenant une pile dedits dispositifs de mesure d'activité ionique, et ledit poussoir (11B) extrayant lesdits dispositifs de mesure, un par un, par poussée à la base dudit porte-plaquettes (11A).

6. Dispositif pour la mesure de l'activité ionique suivant la revendication 1, caractérisé en ce qu'il comprend en outre une section de commande et d'affichage (16) comportant un panneau de commande (16A) et une zone d'affichage (11c) pour indiquer la sortie des dites sondes (14A), ladite section de commande et d'affichage (16) étant disposée dans un coffret (10) de manière à être visible de l'extérieur de celui-ci, et les dits moyens de distribution (11), lesdits moyens de formation de tache (12), ladite tourelle (13A) et les dites sondes (14A) sont contenues à l'intérieur dudit coffret (10).

7. Dispositif pour la mesure de l'activité ionique suivant la revendication 1, caractérisé en ce que lesdits moyens de formation de tache de référence (12A-12D, 12A'-12D') sont disposés en liaison avec un réservoir (12A, 12A') contenant ladite solution de référence et une section de formation de tache (12) dudit dispositif de mesure, et comprennent une buse d'égouttage (12C, 12C') connectée audit réservoir (12A, 12A') de façon à distribuer goutte-à-goutte ladite solution de référence qu'il contient, et des moyens de distribution de solution de référence (12B, 12D, 12B', 12D') qui fournissent un volume constant prédéterminé de ladite solution de référence à partir dudit réservoir (12A, 12A') à travers ladite buse (12C, 12C'), lesdits moyens de distribution de solution de référence (12B, 12D, 12B', 12D') fournissant ladite solution de référence par l'intermédiaire de ladite buse (12C, 12C') lorsque ledit dispositif de mesure s'arrête au-dessous de ladite buse (12B, 12D, 12B', 12D').

8. Dispositif pour la mesure de l'activité ionique suivant la revendication 7, caractérisé en ce que lesdits moyens de formation de tache de référence (12A-12D) comprennent une pompe péristaltique (12B).

9. Dispositif pour la mesure de l'activité ionique suivant la revendication 7, caractérisé en ce que lesdits moyens de formation de tache de référence (12A'-12D') comprennent un distributeur de goutte (12B').

10. Dispositif pour la mesure de l'activité ionique suivant la revendication 1 ou 7, caractérisé en ce que ledit premier élément de transport comporte des moyens thermostatiques (13C) pour maintenir ledit dispositif de mesure à une température constante pendant le déplacement.

11. Dispositif pour la mesure de l'activité ionique suivant la revendication 10, caractérisé en ce que ladite paire de sondes (14A) comporte une pluralité de paires de bornes du type à aiguille (14a, 14b, 14c) prévues pour venir simultanément en contact avec une pluralité de paires d'électrodes à sélectivité ionique (3.1A, 3.1B, 3.2A, 3.2B, 3.3A, 3.3B, 3.4A, 3.4B) dudit dispositif de mesure.

# F I G. l

# F I G. 2

# F I G. 3

# F I G.4

12D

12C

12B

12A

# F I G.5

12D'

12B'

12A'

12C'

# F I G.6A

14g 14h 14e 14i

14A 14f 14B

14d 14e

14a 14b 14c

# F I G.6B

14A 14B

14a 14b 14c